# EUROPEAN PATENT SPECIFICATION

(11) **EP 3 709 768 B1**
(45) Date of publication and mention of the grant of the patent: **12.04.2023**
(21) Application number: 20162014.3
(22) Date of filing: 10.03.2020
(51) Int. Cl.: H05B 6/06, G01K 1/02

(54) **INDUCTION COOKER**
INDUKTIONSHERD
APPAREIL DE CUISSON À INDUCTION

(30) Priority: 12.03.2019 CN 201910184253
(43) Date of publication of application: 16.09.2020
(73) Proprietor: Tyco Electronics (Shanghai) Co., Ltd., Shanghai 201208 (CN); MEAS France, 31027 Toulouse Cedex 3 (FR)
(72) Inventor: GALLORINI, Romuald, 31027 Toulouse (FR); FAN, Mingjie, Xuhui District, Shanghai 200233 (CN); WANG, Shaoyong, Xuhui District, Shanghai 200233 (CN)
(74) Representative: Grünecker Patent- und Rechtsanwälte PartG mbB

(56) References cited:
- EP-A1- 2 800 454
- EP-A1- 3 570 634
- WO-A1-2012/094770
- WO-A2-2015/128578
- DE-A1-102012 200 294
- JP-A- 2012 146 423

## Description

### BACKGROUND OF THE INVENTION

### Field of the Invention

The present invention relates to an induction cooker, more particularly, relates to an induction cooker with a plurality of stoves.

### Description of the Related Art

With the development of smart home appliances, some high-end induction cookers with multiple stoves may heat a plurality of pots at the same time. For this type of induction cooker, temperatures of the pots placed on the plurality of stoves are needed to be detected and controlled, respectively. In the prior art, a temperature sensor is provided on each pot to detect the temperature of the pot. The detected temperature signal of each pot is transmitted to a controller. However, in this case, the controller cannot determine which stove the received temperature signal corresponds to. Thereby, it is impossible to adjust the temperatures of the pots, respectively, by controlling the respective stoves, which may reduce the cooking effect of the induction cooker.

DE102012200294 A1 discloses an induction cooker according to the preamble of claim 1.
EP 2 800 454 A1 discloses an induction heating cooker, which has a plurality of inverters. When the input power varies to the inverter which has less input power supplied, the variation hardly influences the cooking. The induction heating cooker fixes the operating frequency for the inverter which has less input power supplied and performs the feedback control of the input current for the inverter which has bigger input power supplied.
EP 3 570 634 A1 discloses an induction heating device having an improved control algorithm and an improved circuit structure. In one embodiment, two working coils are controlled either individually by two separate inverters or together by the inverter IV1 alone. For this purpose, relays R1 and R2 can switch one of the working coil to be connected to either a first inverter or a second inverter.

### SUMMARY OF THE INVENTION

The present invention has been made to overcome or alleviate at least one aspect of the above mentioned disadvantages.

This object is achieved by the present invention as claimed in the independent claims. Advantageous and preferred embodiments of the present invention are defined by the dependent claims.

According to an example, there is provided an induction cooker, comprising: a plurality of stoves, each of which comprises a transmitting coil and a driver for driving the transmitting coil to work; and a controller adapted to control the driver of each stove to generate a drive signal, the drive signal generated by the driver of each stove comprises a periodically cyclic modulation signal sequence, the modulation signal sequences in the drive signals generated by the drivers of different stoves are different from each other, so that the stoves are identified and distinguished from each other according to the modulation signal sequences.

According to an exemplary embodiment of the present invention, at least one of amplitudes, phases, and frequencies of the modulation signal sequences in the drive signals generated by the drivers of different stoves are different.

According to another exemplary embodiment of the present invention, the amplitudes of the modulation signal sequences in the drive signals generated by the drivers of different stoves are different, so that the stoves are identified and distinguished from each other according to the amplitudes of the modulation signal sequences.

According to another exemplary embodiment of the present invention, the phases of the modulation signal sequences in the drive signals generated by the drivers of different stoves are different, so that the stoves are identified and distinguished from each other according to the phases of the modulation signal sequences.

According to another exemplary embodiment of the present invention, the frequencies of the modulation signal sequences in the drive signals generated by the drivers of different stoves are different, so that the stoves are identified and distinguished from each other according to the frequencies of the modulation signal sequences.

According to another exemplary embodiment of the present invention, the induction cooker further comprises a plurality of pots adapted to be placed on the plurality of stoves, respectively; the transmitting coils of the plurality of stoves are adapted to heat the plurality of pots placed on the plurality of stoves, respectively.

According to another exemplary embodiment of the present invention, each pot comprises a receiving coil adapted to electromagnetically couple with the transmitting coil of the stove, the receiving coil is configured to receive the drive signal transmitted from the transmitting coil, so that the stove corresponding to the respective pot is identified according to the modulation signal sequence in the received drive signal.

According to another exemplary embodiment of the present invention, each pot further comprises a signal process circuit adapted to process the drive signal received by the receiving coil and convert the modulation signal sequence in the drive signal into a digital identification signal sequence, so that the stove corresponding to the respective pot is identified according to the digital identification signal sequence.

According to another exemplary embodiment of the present invention, each pot further comprises a temperature sensor and a wireless transmitting module, the temperature sensor is configured to detect a temperature of the pot, the wireless transmitting module is adapted to transmit the digital identification signal sequence and the detected temperature signal to a wireless mobile communication device and/or a wireless communication module provided on the induction cooker.

According to another exemplary embodiment of the present invention, the controller is adapted to identify the stove corresponding to the respective temperature signal based on the digital identification signal sequence received by the wireless mobile communication device and/or the wireless communication module.

According to another exemplary embodiment of the present invention, the controller is adapted to control the driver of the respective stove based on the temperature signal received by the wireless mobile communication device and/or the wireless communication module, so that the temperature of the respective stove reaches a predetermined temperature.

In the above various exemplary embodiments of the present invention, the drive signal of each stove comprises a periodically cyclic modulation signal sequence, and the modulation signal sequences of different stoves are different from each other. Thereby, it is possible to identify and distinguish the stoves according to the modulation signal sequences. In this way, in the present invention, it is possible to reasonably adjust the temperatures of the pots, respectively, by controlling the respective stoves, which may improve the cooking effect of the induction cooker.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative view of an induction cooker according to an exemplary embodiment of the present invention; and
Fig.2 shows a schematic diagram of a drive signal, a modulation signal sequence, and a digital identification signal sequence according to an exemplary embodiment of the present invention.

### DETAILED DESCRIPTION OF PREFERRED EMBODIMENTS OF THE

### IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an induction cooker, comprising: a plurality of stoves, each of which comprises a transmitting coil and a driver for driving the transmitting coil to work; and a controller adapted to control the driver of each stove to generate a drive signal, the drive signal generated by the driver of each stove comprises a periodically cyclic modulation signal sequence, the modulation signal sequences in the drive signals generated by the drivers of different stoves are different from each other, so that the stoves are identified and distinguished from each other according to the modulation signal sequences.

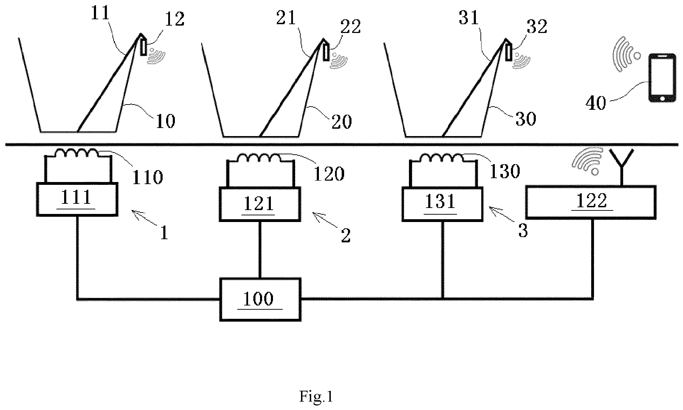

Fig.1 is an illustrative view of an induction cooker according to an exemplary embodiment of the present invention.

As shown in Fig.1, in an embodiment, the induction cooker mainly comprises a plurality of stoves 1, 2, 3 and a controller 100. In the illustrated embodiment, the induction cooker comprises three stoves 1, 2, 3, but the present invention is not limited to this, the induction cooker may comprise two, four or more stoves.

As shown in Fig.1, in an embodiment, each stove 1, 2, 3 comprises a transmitting coil 110, 120, 130 and a driver 111, 121, 131. The driver 111, 121, 131 is configured to drive the respective transmitting coil 110, 120, 130 to work.

As shown in Fig.1, in an embodiment, for convenience of explanation, the three stoves 1, 2, 3 are referred as a first stove 1, a second stove 2, and a third stove 3, respectively. The first stove 1 comprises a first transmitting coil 110 and a first driver 111. The second stove 2 comprises a second transmitting coil 120 and a second driver 121. The third stove 3 comprises a third transmitting coil 130 and a third driver 131.

As shown in Fig.1, in an embodiment, the controller 100 is adapted to control the driver 111, 121, 131 of each stove 1, 2, 3 to generate a drive signal. The drive signal is usually a high frequency AC signal.

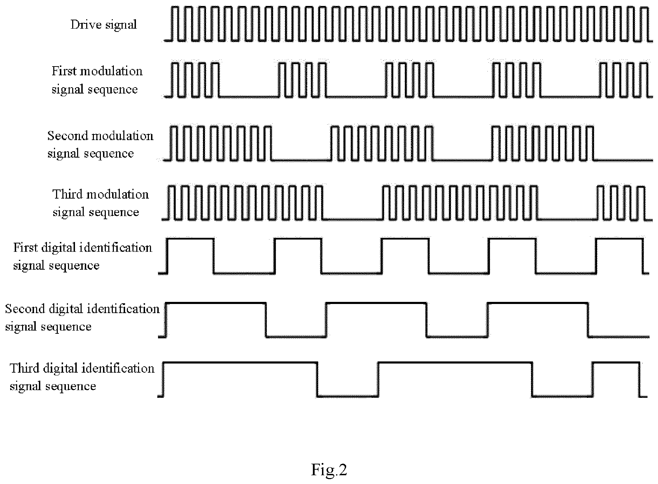

Fig.2 shows a schematic diagram of a drive signal, a modulation signal sequence, and a digital identification signal sequence according to an exemplary embodiment of the present invention.

As shown in Figs. 1-2, in an embodiment, the drive signal generated by the driver 111, 121, 131 of each stove 1, 2, 3 comprises a periodically cyclic modulation signal sequence.

As shown in Figs.1-2, in an embodiment, the modulation signal sequences in the drive signals generated by the drivers 111, 121, 131 of different stoves 1, 2, 3 are different from each other, so that the stoves 1, 2, 3 are identified and distinguished from each other according to the modulation signal sequences.

In an exemplary embodiment of the present invention, at least one of amplitudes, phases, and frequencies of the modulation signal sequences in the drive signals generated by the drivers 111, 121, 131 of different stoves 1, 2, 3 are different.

As shown in Figs.1-2, in an embodiment, the amplitudes of the modulation signal sequences in the drive signals generated by the drivers 111, 121, 131 of different stoves 1, 2, 3 are different, so that the stoves 1, 2, 3 are identified and distinguished from each other according to the amplitudes of the modulation signal sequences.

As shown in Figs. 1-2, in an embodiment, the modulation signal sequence in the drive signal generated by the first driver 111 of the first stove 1 is referred as a first modulation signal sequence, the modulation signal sequence in the drive signal generated by the second driver 121 of the second stove 2 is referred as a second modulation signal sequence, and the modulation signal sequence in the drive signal generated by the third driver 131 of the third stove 3 is referred as a third modulation signal sequence.

As clearly shown in Fig.2, in an embodiment, the amplitudes of the first modulation signal sequence, the second modulation signal sequence and the third modulation signal sequence are different from each other. Thereby, in this case, it is possible to identify and distinguish the first stove 1, the second stove 2 and the third stove 3 according to the amplitudes of the first, second and third modulation signal sequences.

Although it is not shown, in another exemplary embodiment of the present invention, the phases of the modulation signal sequences in the drive signals generated by the drivers 111, 121, 131 of different stoves 1, 2, 3 may be different. Thereby, in this case, it is possible to identify and distinguish the first stove 1, the second stove 2 and the third stove 3 according to the phases of the first, second and third modulation signal sequences.

Although it is not shown, in another exemplary embodiment of the present invention, the frequencies of the modulation signal sequences in the drive signals generated by the drivers 111, 121, 131 of different stoves 1, 2, 3 may be different. Thereby, in this case, it is possible to identify and distinguish the first stove 1, the second stove 2 and the third stove 3 according to the frequencies of the first, second and third modulation signal sequences.

As shown in Fig.1, in an embodiment, the induction cooker further comprises a plurality of pots 10, 20, 30. In the illustrated embodiment, the induction cooker comprises three pots 10, 20, 30, but the present invention is not limited to this, the induction cooker may comprise two, four or more pots.

As shown in Fig.1, in an embodiment, the plurality of pots 10, 20, 30 are adapted to be placed on the plurality of stoves 1, 2, 3, respectively. The transmitting coils 110, 120, 130 of the plurality of stoves 1, 2, 3 are adapted to heat the plurality of pots 10, 20, 30 placed on the plurality of stoves 1, 2, 3, respectively.

As shown in Fig.1, in an embodiment, each pot 10, 20, 30 comprises a receiving coil (not shown) adapted to electromagnetically couple with the transmitting coil 110, 120, 130 of the stove 1, 2, 3. The receiving coil is configured to receive the drive signal transmitted from the transmitting coil 110, 120, 130. Thereby, it is possible to identify the stove 1, 2, 3 corresponding to the respective pot 10, 20, 30 according to the modulation signal sequence in the received drive signal.

As shown in Figs. 1-2, in an embodiment, each pot 10, 20, 30 further comprises a signal process circuit (not shown). The signal process circuit is adapted to process the drive signal received by the receiving coil and convert the modulation signal sequence in the drive signal into a digital identification signal sequence. In this way, it is possible to identify the stove 1, 2, 3 corresponding to the respective pot 10, 20, 30 according to the digital identification signal sequence.

As clearly shown in Fig.2, the first stove 1 corresponds to the first digital identification signal sequence, the second stove 2 corresponds to the second digital identification signal sequence, and the third stove 3 corresponds to the third digital identification signal sequence. Since the amplitudes of the first, second and third digital identification signal sequences are different from each other, the first, second and third stoves 1, 2, 3 corresponding to the first, second and third pots 10, 20, 30, respectively, may be accurately identified according to the first, second and third digital identification signal sequences.

As shown in Figs.1-2, in an embodiment, each pot 10, 20, 30 further comprises a temperature sensor 11, 21, 31 and a wireless transmitting module 12, 22, 32. The temperature sensor 11, 21, 31 is configured to detect a temperature of the pot 10, 20, 30. The wireless transmitting module 12, 22, 32 is adapted to transmit the digital identification signal sequence and the detected temperature signal to a wireless mobile communication device 40 and/or a wireless communication module 122 provided on the induction cooker.

As shown in Figs.1-2, in an embodiment, the controller 100 is adapted to identify the stove 1, 2, 3 corresponding to the respective temperature signal based on the digital identification signal sequence received by the wireless mobile communication device 40 and/or the wireless communication module 122.

As shown in Figs.1-2, in an embodiment, the controller 100 is adapted to control the driver 111, 121, 131 of the respective stove 1, 2, 3 based on the temperature signal received by the wireless mobile communication device 40 and/or the wireless communication module 122, so that the temperature of the respective stove 1, 2, 3 reaches a predetermined temperature.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. An induction cooker, comprising:
a plurality of stoves (1, 2, 3), each of which comprises a transmitting coil (110, 120, 130) and a driver (111, 121, 131) for driving the transmitting coil (110, 120, 130) to work; and
a controller (100) adapted to control the driver (111, 121, 131) of each stove (1, 2, 3) to generate a drive signal, and
a wireless communication module (122),
**characterised in that**,
the drive signal generated by the driver (111, 121, 131) of each stove (1, 2, 3) comprises a periodically cyclic modulation signal sequence corresponding to a digital identification signal sequence,
wherein the modulation signal sequences in the drive signals generated by the drivers (111, 121, 131) of different stoves (1, 2, 3) are different from each other, so that the stoves (1, 2, 3) are identified and distinguished from each other according to the modulation signal sequences, and
wherein the wireless communication module (122) is adapted to receive a temperature signal and the digital identification signal sequence, and
wherein the controller (100) is adapted to identify the stove (1, 2, 3) corresponding to the received temperature signal based on the received digital identification signal sequence, and to control the driver (111, 121, 131) of the identified stove (1, 2, 3) based on the received temperature signal, so that the temperature of the respective stove (1, 2, 3) reaches a predetermined temperature.

2. The induction cooker according to claim 1,
wherein at least one of amplitudes, phases, and frequencies of the modulation signal sequences in the drive signals generated by the drivers (111, 121, 131) of different stoves (1, 2, 3) are different.

3. The induction cooker according to claim 2,
wherein the amplitudes of the modulation signal sequences in the drive signals generated by the drivers (111, 121, 131) of different stoves (1, 2, 3) are different, so that the stoves (1, 2, 3) are identified and distinguished from each other according to the amplitudes of the modulation signal sequences.

4. The induction cooker according to claim 2,
wherein the phases of the modulation signal sequences in the drive signals generated by the drivers (111, 121, 131) of different stoves (1, 2, 3) are different, so that the stoves (1, 2, 3) are identified and distinguished from each other according to the phases of the modulation signal sequences.

5. The induction cooker according to claim 2,
wherein the frequencies of the modulation signal sequences in the drive signals generated by the drivers (111, 121, 131) of different stoves (1, 2, 3) are different, so that the stoves (1, 2, 3) are identified and distinguished from each other according to the frequencies of the modulation signal sequences.

6. The induction cooker according to any one of claims 1-5,
wherein the induction cooker further comprises a plurality of pots (10, 20, 30) adapted to be placed on the plurality of stoves (1, 2, 3), respectively;
wherein the transmitting coils (110, 120, 130) of the plurality of stoves (1, 2, 3) are adapted to heat the plurality of pots (10, 20, 30) placed on the plurality of stoves (1, 2, 3), respectively.

7. The induction cooker according to claim 6,
wherein each pot (10, 20, 30) comprises a receiving coil adapted to electromagnetically couple with the transmitting coil (110, 120, 130) of the stove (1, 2, 3), wherein the receiving coil is configured to receive the drive signal transmitted from the transmitting coil (110, 120, 130), so that the stove (1, 2, 3) corresponding to the respective pot (10, 20, 30) is identified according to the modulation signal sequence in the received drive signal.

8. The induction cooker according to claim 7,
wherein each pot (10, 20, 30) further comprises a signal process circuit adapted to process the drive signal received by the receiving coil and convert the modulation signal sequence in the drive signal into the digital identification signal sequence, so that the stove (1, 2, 3) corresponding to the respective pot (10, 20, 30) is identified according to the digital identification signal sequence.

9. The induction cooker according to claim 8,
wherein each pot (10, 20, 30) further comprises a temperature sensor (11, 21, 31) and a wireless transmitting module (12, 22, 32), the temperature sensor (11, 21, 31) is configured to detect a temperature of the pot (10, 20, 30),
wherein the wireless transmitting module (12, 22, 32) is adapted to transmit the digital identification signal sequence and the detected temperature signal to a wireless mobile communication device (40) and/or a wireless communication module (122) provided on the induction cooker.

## Patentansprüche

1. Induktionsherd, der umfasst:
eine Vielzahl von Herdplatten (1, 2, 3), von denen jede eine Sende-Spule (110, 120, 130) sowie eine Ansteuereinrichtung (111, 121, 131) umfasst, mit der die Sende-Spule (110, 120, 130) zum Arbeiten angesteuert wird; und
eine Steuerungseinrichtung (100), die so eingerichtet ist, dass sie die Ansteuereinrichtung (111, 121, 131) jeder Herdplatte (1, 2, 3) so steuert, dass sie ein Ansteuer-Signal erzeugt, sowie
ein Drahtloskommunikations-Modul (122),
**dadurch gekennzeichnet, dass**
das von der Ansteuereinrichtung (111, 121, 131) jeder Herdplatte (1, 2, 3) erzeugte Ansteuer-Signal eine periodisch zyklische Modulations-Signalsequenz umfasst, die einer digitalen Identifikations-Signalsequenz entspricht,
wobei die Modulations-Signalsequenzen in den von den Ansteuereinrichtungen (111, 121, 131) verschiedener Herdplatten (1, 2, 3) erzeugten Ansteuer-Signalen voneinander verschieden sind, so dass die Herdplatten (1, 2, 3) anhand der Modulations-Signalsequenzen identifiziert und voneinander unterschieden werden,
das Drahtloskommunikations-Modul (122) so eingerichtet ist, dass es ein Temperatur-Signal sowie die digitale Identifikations-Signalsequenz empfängt, und
die Steuerungseinrichtung (100) so eingerichtet ist, dass sie die Herdplatte (1, 2, 3) entsprechend dem empfangenen Temperatur-Signal auf Basis der empfangenen digitalen Identifikations-Signalsequenz identifiziert und die Ansteuereinrichtung (111, 121, 131) der identifizierten Herdplatte (1, 2, 3) auf Basis des empfangenen TemperaturSignals so steuert, dass die Temperatur der jeweiligen Herdplatte (1, 2, 3) eine vorgegebene Temperatur erreicht.

2. Induktionsherd nach Anspruch 1,
wobei Amplituden, Phasen oder/und Frequenzen der Modulations-Signalsequenzen in den von den Ansteuereinrichtungen (111, 121, 131) verschiedener Herdplatten (1, 2, 3) erzeugten Ansteuer-Signalen verschieden sind.

3. Induktionsherd nach Anspruch 2,
wobei die Amplituden der Modulations-Signalsequenzen in den von den Ansteuereinrichtungen (111, 121, 131) verschiedener Herdplatten (1, 2, 3) erzeugten Ansteuer-Signalen verschieden sind, so dass die Herdplatten (1, 2, 3) anhand der Amplituden der Modulations-Signalsequenzen identifiziert und voneinander unterschieden werden.

4. Induktionsherd nach Anspruch 2,
wobei die Phasen der Modulations-Signalsequenzen in den von den Ansteuereinrichtungen (111, 121, 131) verschiedener Herdplatten (1, 2, 3) erzeugten Ansteuer-Signalen verschieden sind, so dass die Herdplatten (1, 2, 3) anhand der Phasen der Modulations-Signalsequenzen identifiziert und voneinander unterschieden werden.

5. Induktionsherd nach Anspruch 2,
wobei die Frequenzen der Modulations-Signalsequenzen in den von den Ansteuereinrichtungen (111, 121, 131) verschiedener Herdplatten (1, 2, 3) erzeugten Ansteuer-Signalen verschieden sind, so dass die Herdplatten (1, 2, 3) anhand der Frequenzen der Modulations-Signalsequenzen identifiziert und voneinander unterschieden werden.

6. Induktionsherd nach einem der Ansprüche 1 - 5,
wobei der Induktionsherd des Weiteren eine Vielzahl von Töpfen (10, 20, 30) umfasst, die jeweils so eingerichtet sind, dass sie auf die Vielzahl von Herdplatten (1, 2, 3) gestellt werden;
und die Sende-Spulen (110, 120, 130) der Vielzahl von Herdplatten (1, 2, 3) so eingerichtet sind, dass sie jeweils die auf die Vielzahl von Herdplatten (10, 20, 30) gestellte Vielzahl von Töpfen erhitzen.

7. Induktionsherd nach Anspruch 6,
wobei jeder Topf (10, 20, 30) eine Empfangs-Spule umfasst, die zum elektromagnetischen Koppeln mit der Sendespule (110, 120, 130) der Herdplatte (1, 2, 3) eingerichtet ist, und die Empfangs-Spule so ausgeführt ist, dass sie das von der Sende-Spule (110, 120, 130) gesendete Ansteuer-Signal empfängt, so dass die dem jeweiligen Topf (10, 20, 30) entsprechende Herdplatte (1, 2, 3) anhand der Modulations-Signalsequenz in dem empfangenen Ansteuer-Signal identifiziert wird.

8. Induktionsherd nach Anspruch 7,
wobei jeder Topf (10, 20, 30) des Weiteren eine Signalverarbeitungs-Schaltung umfasst, die so eingerichtet ist, dass sie das durch die Empfangsspule empfangene Ansteuer-Signal verarbeitet und die Modulations-Signalsequenz in dem Ansteuer-Signal in die digitale Identifikations-Signalsequenz umwandelt, so dass die dem jeweiligen Topf (10, 20, 30) entsprechende Herdplatte (1, 2, 3) anhand der digitalen Identifikations-Signalsequenz identifiziert wird.

9. Induktionsherd nach Anspruch 8,
wobei jeder Topf (10, 20, 30) des Weiteren einen Temperatur-Sensor (11, 21, 31) sowie ein Drahtlosübertragungs-Modul (12, 22, 32) umfasst, und der Temperatur-Sensor (11, 21, 31) so ausgeführt ist, dass er eine Temperatur des Topfes (10, 20, 30) erfasst,
und das Drahtlosübertragungs-Modul (12, 22, 32) so eingerichtet ist, dass es die digitale Identifikations-Signalsequenz und das erfasste Temperatur-Signal zu einem Drahtlos-Mobilkommunikationsgerät (40) und/oder einem an dem Induktionsherd vorhandenen Drahtloskommunikations-Modul (122) überträgt.

## Revendications

1. Appareil de cuisson à induction, comprenant :
une pluralité de réchaud (1, 2, 3), chacune d'entre elles comprenant une bobine d'émission (110, 120, 130) et un pilote (111, 121, 131) pour faire fonctionner la bobine d'émission (110, 120, 130) ; et
un dispositif de commande (100) conçu pour commander le pilote (111, 121, 131) de chaque réchaud (1, 2, 3) pour générer un signal de commande, et
un module de communication sans fil (122),
**caractérisé en ce que**
le signal de commande généré par le pilote (111, 121, 131) de chaque réchaud (1, 2, 3) comprend une séquence de signal de modulation cyclique périodique correspondant à une séquence de signal d'identification numérique,
dans lequel les séquences de signaux de modulation dans les signaux de commande générés par les pilotes (111, 121, 131) de différents réchauds (1, 2, 3) sont différentes les unes des autres, de sorte que les réchauds (1, 2, 3) sont identifiés et distingués les uns des autres selon les séquences de signaux de modulation, et
dans lequel le module de communication sans fil (122) est conçu pour recevoir un signal de température et la séquence de signaux d'identification numérique, et
dans lequel le dispositif de commande (100) est conçu pour identifier le réchaud (1, 2, 3) correspondant au signal de température reçu sur la base de la séquence de signaux d'identification numérique reçue, et pour commander le pilote (111, 121, 131) du réchaud identifié (1, 2, 3) sur la base du signal de température reçu, de sorte que la température du réchaud respectif (1, 2, 3) atteigne une température prédéterminée.

2. Appareil de cuisson à induction selon la revendication 1,
dans lequel au moins l'une des amplitudes, phases et fréquences des séquences de signaux de modulation dans les signaux de commande générés par les pilotes (111, 121, 131) de différents réchauds (1, 2, 3) sont différentes.

3. Appareil de cuisson à induction selon la revendication 2,
dans lequel les amplitudes des séquences de signaux de modulation dans les signaux de commande générés par les pilotes (111, 121, 131) de différents réchauds (1, 2, 3) sont différentes, de sorte que les réchauds (1, 2, 3) sont identifiés et distingués les uns des autres en fonction des amplitudes des séquences de signaux de modulation.

4. Appareil de cuisson à induction selon la revendication 2,
dans lequel les phases des séquences de signaux de modulation dans les signaux de commande générés par les pilotes (111, 121, 131) de différents réchauds (1, 2, 3) sont différents, de sorte que les réchauds (1, 2, 3) sont identifiés et distingués les uns des autres en fonction des phases des séquences de signaux de modulation.

5. Appareil de cuisson à induction selon la revendication 2,
dans lequel les fréquences des séquences de signaux de modulation dans les signaux de commande générés par les pilotes (111, 121, 131) de différents réchauds (1, 2, 3) sont différentes, de sorte que les réchauds (1, 2, 3) sont identifiés et distingués les unes des autres en fonction des fréquences des séquences de signaux de modulation.

6. Appareil de cuisson à induction selon l'une quelconque des revendications 1 à 5,
dans lequel le cuiseur à induction comprend en outre une pluralité de casseroles (10, 20, 30) conçues pour être placées sur la pluralité de cuisinières (1, 2, 3), respectivement ;
dans lequel les bobines de transmission (110, 120, 130) de la pluralité de réchauds (1, 2, 3) sont conçues pour chauffer la pluralité de pots (10, 20, 30) placés sur la pluralité de réchauds (1, 2, 3), respectivement.

7. Appareil de cuisson à induction selon la revendication 6,
dans lequel chaque casserole (10, 20, 30) comprend une bobine réceptrice conçue pour être couplée électromagnétiquement avec la bobine émettrice (110, 120, 130) du réchaud (1, 2, 3), dans lequel la bobine réceptrice est configurée pour recevoir le signal de commande transmis par la bobine émettrice (110, 120, 130), de sorte que le réchaud (1, 2, 3) correspondant à la casserole respective (10, 20, 30) est identifié selon la séquence de signaux de modulation dans le signal de commande reçu.

8. Appareil de cuisson à induction selon la revendication 7,
dans lequel chaque pot (10, 20, 30) comprend en outre un circuit de traitement de signal conçu pour traiter le signal de commande reçu par la bobine de réception et convertir la séquence de signal de modulation dans le signal de commande en séquence de signal d'identification numérique, de sorte que le réchaud (1, 2, 3) correspondant au pot respectif (10, 20, 30) est identifié selon la séquence de signal d'identification numérique.

9. Appareil de cuisson à induction selon la revendication 8,
dans lequel chaque pot (10, 20, 30) comprend en outre un capteur de température (11, 21, 31) et un module de transmission sans fil (12, 22, 32), le capteur de température (11, 21, 31) est configuré pour détecter une température du pot (10, 20, 30),
dans lequel le module de transmission sans fil (12, 22, 32) est conçu pour transmettre la séquence de signaux d'identification numériques et le signal de température détecté à un dispositif de communication mobile sans fil (40) et/ou un module de communication sans fil (122) prévu sur la Appareil de cuisson à induction.
